# FASCICULE DE BREVET EUROPEEN

(11) **EP 1 690 619 B1**
(45) Date de publication et mention de la délivrance du brevet: **12.12.2007**
(21) Numéro de dépôt: 06290209.3
(22) Date de dépôt: 06.02.2006
(51) Int. Cl.: B23D 19/04, B23D 33/08

(54) **Table de coupe pour métal en feuille**
Schneidtisch für Metallbleche
Cutting table for metal sheets

(30) Priorité: 11.02.2005 FR 0501396
(43) Date de publication de la demande: 16.08.2006
(73) Titulaire: G. Participations, 44150 Ancenis (FR)
(72) Inventeur: Goubaud, Michel, 44150 Saint Herblon (FR); Goubaud, Laurent, 44150 Ancenis (FR); Goubaud, Sébastien, 44150 Ancenis (FR)
(74) Mandataire: Laget, Jean-Loup

(56) Documents cités:
- FR-A- 2 504 429
- FR-A- 2 505 223
- US-A- 5 992 203
- US-A- 6 000 268

## Description

La présente invention concerne d'une manière générale les tables de coupe propres à la découpe d'une quelconque feuille de métal, et en particulier d'une feuille de zinc, et vise plus particulièrement celles de ces tables de coupe qui sont destinées à être mises en oeuvre sur chantier par certains corps de métier et notamment par les couvreurs.

D'une manière générale, les tables de coupe, qu'il s'agisse d'une table destinée à la seule découpe d'une feuille de métal ou qu'il s'agisse d'une table adaptée à assumer d'autres fonctions, par exemple le pliage et/ou l'ourlage d'une telle feuille de métal, comportent un sommier inférieur formant table qui est fixe, un sommier supérieur formant presse-flan qui est mobile entre une position rabattue de fermeture pour laquelle, avec le sommier inférieur, il coopère au maintien de la feuille de métal à couper par serrage de celle-ci et une position déployée d'ouverture pour laquelle, écarté du sommier inférieur, il permet la mise en place et le retrait d'une telle feuille, et un dispositif de découpe comprenant un rail de guidage propre au guidage d'un chariot de coupe.

De telles tables sont bien connues à ceux versés dans cet art et sont notamment décrites dans les brevets FR-A-2.505.223 ou FR-A-2.504.429.

Le dispositif de découpe comprend généralement un rail de guidage s'étendant le long du bord longitudinal formant bec d'appui du presse-flan ou serre- flan et un chariot déplaçable à coulissement le long dudit rail. Ce chariot, positionné par simple appui sur ledit rail, porte au moins deux molettes de coupe à axes de rotation parallèles, destinées à s'étendre de part et d'autre de la feuille à couper. Le couple de basculement du chariot, lié au poids des molettes, doit être neutralisé par appui du chariot en façade de la table. Jusqu'à présent, cet appui est réalisé soit par coopération d'un galet avec la façade du sommier inférieur, comme l'illustre en particulier le brevet FR-A-2.505.223, soit par coopération d'un galet du chariot avec une cornière rapportée sur la face en façade du sommier comme l'illustre en particulier le brevet FR-A-2.504.429.

L'inconvénient de telles solutions réside dans le fait qu'il est nécessaire de concevoir chaque dispositif de découpe en fonction de la conception de la table de coupe. En effet, il arrive fréquemment que les dimensions des sommiers varient d'une table de coupe à une autre. Dans ce cas, le dispositif de découpe n'est plus adapté.

Les brevets américains US-5.582.053 et US-5.992.203 décrivent un dispositif de découpe de feuilles de métal dans lequel le serre-flan est équipé de deux surfaces de guidage d'un chariot, ces surfaces de guidage prenant naissance sur la face du dessus de ce serre-flan. Ces surfaces de guidage coopèrent avec les roulettes du chariot en vue d'assurer un guidage axial du chariot. Du fait de la disposition des surfaces de guidage sur une même face de serre-flan, il est impossible de neutraliser le couple de basculement du chariot. En conséquence, un appui supplémentaire du chariot sur la table est nécessaire. Cet appui est, dans les exemples représentés, positionné au dessous du plan d'insertion de la feuille dans la table. En conséquence, à nouveau, les caractéristiques constructives de la table doivent être connues pour permettre la mise en oeuvre de ce troisième appui.

Le brevet US-A-6.000.268 décrit également un dispositif de découpe de feuille de métal dans lequel le serre-flan est équipé de deux surfaces de guidage d'un chariot, ces surfaces de guidage prenant naissance sur la face du dessus de ce serre-flan. Ces surfaces de guidage coopèrent avec les roulettes du chariot en vue d'assurer un guidage axial du chariot. Du fait de la disposition des surfaces de guidage sur une même face du serre-flan, il est difficile de neutraliser le couple de basculement du chariot. En outre, le positionnement des points d'appui du chariot sur un élément constitutif de la table nécessite de connaître les caractéristiques constructives de la table pour permettre la conception du chariot, rendant impossible la mise au point d'un dispositif de découpe autonome adaptable à n'importe quelle table de coupe.

Un but de la présente invention est donc de proposer une table de coupe dont le dispositif de découpe est, de par sa conception, entièrement autonome et est apte à s'adapter à n'importe quelle table de coupe.

A cet effet, invention a pour objet une table de coupe pour métal en feuille, en particulier zinc, du type comportant un sommier formant table, un serre-flan mobile entre une position d'introduction ou de retrait de ladite feuille et une position de serrage de la feuille à couper contre ledit sommier, un dispositif de découpe comprenant un rail de guidage dont la partie active s'étend le long du bord longitudinal formant bec d'appui du serre-flan et un chariot déplaçable à coulissement le long dudit rail, ce chariot, positionné généralement par simple appui sur ledit rail, portant au moins deux molettes de coupe à axes de rotation parallèles, destinées à s'étendre de part et d'autre de la feuille à couper, le couple de basculement du chariot lié au poids des molettes étant neutralisé par appui du chariot en façade de la table, caractérisée en ce que le rail est équipé d'au moins deux surfaces actives, l'une de guidage axial du chariot, l'autre d'appui du chariot en façade, cette surface d'appui étant formée par le flanc du rail faisant office de règle de manière à permettre au rail d'assurer seul le guidage et l'appui en façade du chariot en vue de l'obtention d'un dispositif de découpe autonome apte à s'adapter à tout type de table.

L'invention a encore pour objet un dispositif de découpe de métal en feuille comprenant un rail de guidage et un chariot déplaçable à coulissement le long dudit rail, ce chariot positionné par simple appui sur ledit rail portant au moins deux molettes de coupe à axes de rotation parallèles, destinées à s'étendre de part et d'autre de la feuille à couper, le couple de basculement du chariot lié au poids des molettes étant neutralisé par appui du chariot le long d'un flanc du rail, caractérisé en ce que le chariot et le rail, qui assure seul le guidage et l'appui en façade du chariot, sont équipés de moyens de liaison à une table de coupe du type précité.

L'invention sera bien comprise à la lecture de la description suivante d'exemples de réalisation, en référence aux dessins annexés dans lesquels :
la figure 1 représente une vue en perspective d'une table de coupe conforme à l'invention ;
la figure 2 représente une vue en coupe verticale partielle de la figure 1 illustrant le dispositif de découpe en position de travail ;
la figure 3 représente une vue d'ensemble du dispositif de découpe ;
la figure 4 représente une vue de côté de la figure 3 en position de travail du dispositif de découpe et
la figure 5 représente une vue partielle en coupe de la table représentée à la figure 1 en position d'attente du dispositif de découpe.

Telle qu'illustrée sur les figures et de manière connue en soi, la table 1 de coupe suivant l'invention, qui est destinée à couper une quelconque feuille de métal, et en particulier une feuille de zinc, comporte globalement un sommier 2 inférieur formant table qui est fixe, un sommier supérieur formant serre-flan 4 et un dispositif de découpe. Le serre-flan 4 est mobile entre une position rabattue de fermeture pour laquelle, avec le sommier 2 inférieur, il coopère au maintien de la feuille de métal à couper par serrage de celle-ci, et une position déployée d'ouverture pour laquelle, écarté du sommier inférieur, il permet la mise en place et le retrait d'une telle feuille.

Le sommier inférieur et le serre-flan peuvent être reliés l'un à l'autre par des biellettes, des moyens hydrauliques ou autre. Le serre-flan 4 peut encore être articulé au sommier 2 par l'intermédiaire de bras non représentés aux figures. Le détail de la réalisation du sommier ne sera pas fourni ci-après car il est bien connu à ceux versés dans cet art.

Il est à noter que le sommier 2 formant table peut être associé à un tablier 3 qui permet un fonctionnement en plieuse de ladite table. En effet, ce tablier 3 peut être rendu mobile par rapport au sommier constituant une table fixe.

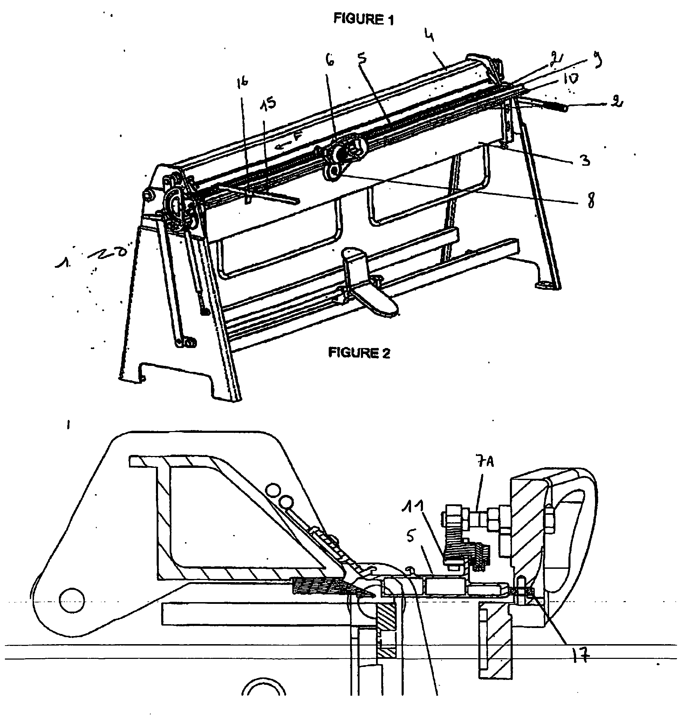

Le dispositif de découpe comprend quant à lui un rail 5 de guidage s'étendant le long du bord longitudinal formant bec d'appui du serre-flan 4 et un chariot 6 déplaçable à coulissement le long dudit rail 5. Ce chariot 6, positionné par simple appui sur ledit rail 5, porte au moins deux molettes 7, 8 de coupe ayant leurs axes de rotation horizontaux en position de service et perpendiculaires à l'axe de déplacement du chariot le long du rail. Ces deux molettes coupantes 7, 8 sont adaptées à opérer de part et d'autre de la feuille à découper. Leurs axes parallèles sont fixés sur le corps d'un chariot 6 pourvu d'une poignée de manoeuvre. Cette poignée permet à un opérateur d'agir dans le sens de la flèche F à la figure 1 pour déplacer le chariot 6 le long du rail 5 de guidage. Ce rail 5 est monté de manière amovible au-dessus de la feuille à découper en regard du bec d'appui du serre-flan 4.

Comme les molettes 7, 8 de coupe doivent s'étendre de part et d'autre de la feuille à découper, une grande partie du chariot 6 est montée déportée par rapport au rail 5 de guidage. Pour neutraliser le couple de basculement qui en résulte, il est nécessaire de maintenir en appui le chariot 6 en façade de la table. A cet effet, le rail 5, qui est équipé d'au moins deux surfaces 9, 10 actives présente l'une de ses surfaces, représentée en 10 aux figures et constituée par le flanc du rail 5, qui sert de surface d'appui au chariot 6 pour éviter son basculement. Ainsi, ce rail 5 assure seul le guidage et l'appui en façade du chariot 6. Il comporte en effet une autre surface de guidage représentée en 9 aux figures qui est formée par une lèvre en saillie de la face du dessus du rail 5. Cette surface 9 assure le guidage axial à coulissement du chariot 6 le long du rail 5. Ainsi, la partie active du rail 5 affecte la forme d'un profilé généralement creux de forme généralement parallélépipédique, les surfaces 9, 10 actives du rail 5 prenant naissance ou étant situées, sur deux faces orthogonales entre elles dudit profilé. Ainsi, le chariot prend appui de manière directe ou indirecte sur la face dite du dessus et une face latérale formant règle dudit profilé en position active du rail. Le chariot 6 comporte quant à lui, portés par l'axe de rotation 8A de la molette 8 coupante supérieure, au moins deux galets 11 de guidage, d'axes verticaux perpendiculaires à l'axe de déplacement du chariot, et destinés à rouler le long des faces de la lèvre 9 en saillie de la face du dessus du rail 5.

Un autre organe d'appui du chariot 6 sur le rail 5 est constitué par un galet 17 à nouveau d'axe vertical perpendiculaire à l'axe de déplacement du chariot le long du rail. Ce galet est en appui roulant le long d'un des flancs 10 du rail 5 et permet de neutraliser le couple de basculement qui s'exerce sur le chariot 6. Ainsi, la coopération de la lèvre 9 avec les galets de guidage 11 et celle du flanc 10 du rail 5 avec le galet 17 permettent d'assurer un guidage parfait du chariot sans aide extérieure. On constate que pour ces deux coopérations, les organes de guidage ou d'appui du chariot sont formés par des galets d'axe vertical généralement perpendiculaire à l'axe de déplacement du chariot le long du rail.

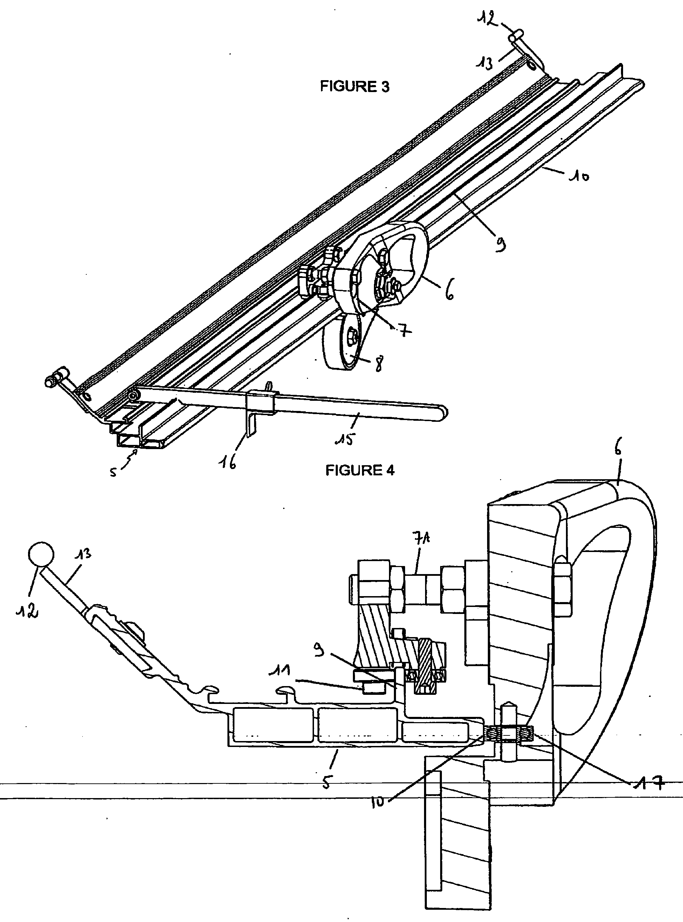

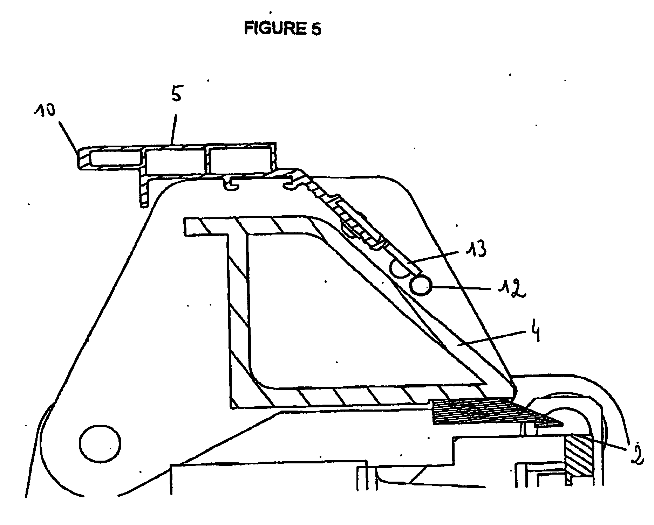

Comme l'illustrent les figures, le rail 5 est couplé au serre-flan 4 ou au sommier 2 par une liaison 12 articulée autorisant un déplacement à pivotement du rail 5 entre une position escamotée d'attente dans laquelle il épouse le dessus du serre-flan 4 et une position basculée de service dans laquelle sa partie active s'étend, au-dessus de la feuille à couper, le long du bord longitudinal formant bec d'appui du serre-flan 4. Pour permettre le déplacement entre ces deux positions représentées respectivement aux figures 4 et 5, le rail 5 affecte de préférence la forme d'un dièdre. L'une des faces du dièdre, constituant la partie active du dièdre, est réalisée sous forme d'un plateau ou profilé de forme générale parallélépipédique évidé destiné à constituer la surface d'appui du chariot 6. L'autre face du dièdre est prolongée transversalement de bras 13 articulés au voisinage de leur extrémité au serre-flan 4 ou au sommier 2 de préférence de manière amovible. Généralement, les plans du dièdre forment entre eux un angle de préférence voisin de 145°.

Les bras 13 sont quant à eux terminés à leur extrémité par un bout d'axe 12 formant pivot.

Le serre-flan 4 peut être articulé au sommier 2 par l'intermédiaire de bras dont l'axe d'articulation est parallèle ou confondu avec l'axe d'articulation des bras 13 du rail 5 au sommier 2. Ainsi, lorsque le serre-flan mobile est relié au sommier, en particulier à des joues équipant le sommier au moyen de deux pivots d'articulation horizontaux parallèles à l'axe de déplacement du chariot le long du rail, les bras 13 du rail 5 peuvent être munis, à leur extrémité, d'un perçage permettant leur articulation sur ces mêmes pivots horizontaux du serre-flan mobile. Bien évidemment, d'autres modes de réalisation de cette articulation peuvent être prévus. Les bras 13 du rail peuvent en particulier être équipés de leur propre axe pivot 12 de liaison aux joues du serre-flan 4 comme l'illustrent les figures.

Il est également prévu, embarquées sur le rail, au moins deux butées de réglage de fin de course de la feuille à couper. Chaque butée est formée d'un bras 15 équipé d'un curseur 16 coulissant le long du bras 15. Ce bras 15 est monté à pivotement sur le rail 5 autour d'un axe parallèle à l'axe de déplacement du chariot 6 sur le rail 5 pour passer d'une position d'attente à une position de service dans laquelle le curseur 16 formant butée fait saillie dans le plan de serrage de la feuille à couper. La position de service de cette butée est plus particulièrement représentée à la figure 3. La feuille à couper vient ainsi par son bord libre en appui sur ladite butée.

Le fonctionnement d'une telle table de coupe est analogue à celui d'une table de coupe connue. Si l'on suppose que la feuille à découper est d'ores et déjà engagée entre le serre-flan mobile et le sommier et qu'elle est immobilisée par le serre-flan mobile sur ledit sommier, il suffit pour procéder à la découpe de ladite feuille de déplacer le chariot le long du rail 5 de guidage après avoir préalablement amené en position de service le rail de guidage par rotation autour de son axe de liaison au sommier ou au serre-flan.

La feuille est alors découpée au moyen des deux molettes 7, 8 suivant un trait exactement parallèle au flanc 10 du rail 5 de guidage.

## Revendications

1. Table (1) de coupe pour métal en feuille, en particulier zinc, du type comportant un sommier (2) formant table, un serre-flan (4) mobile entre une position d'introduction ou de retrait de ladite feuille et une position de serrage de la feuille à couper contre ledit sommier (2), un dispositif de découpe comprenant un rail (5) de guidage et un chariot (6) déplaçable à coulissement le long dudit rail (5), ce chariot (6), positionné généralement par simple appui sur ledit rail (5), portant au moins deux molettes (7, 8) de coupe à axes de rotation parallèles, destinées à s'étendre de part et d'autre de la feuille à couper, le couple de basculement du chariot (6) lié au poids des molettes (7, 8) étant neutralisé par appui du chariot (6) en façade de la table (1),
**caractérisée en ce que** le rail (5), dont la partie active s'étend le long du bord longitudinal formant bec d'appui du serre-flan (4), est équipé d'au moins deux surfaces (9, 10) actives, l'une de guidage axial du chariot (6), l'autre (10) d'appui du chariot (6) en façade, cette surface (10) d'appui étant formée par le flanc (10) du rail (5) faisant office de règle de manière à permettre au rail d'assurer seul le guidage et l'appui en façade du chariot en vue de l'obtention d'un dispositif de découpe autonome apte à s'adapter à tout type de table (1).

2. Table (2) de coupe selon la revendication 1,
**caractérisée en ce que** la surface (9) de guidage du rail (5) est formée par une lèvre (9) en saillie de la face du dessus du rail (5).

3. Table (1) de coupe selon la revendication 1,
**caractérisée en ce que** le rail (5) est couplé au serre-flan (4) ou au sommier (2) par une liaison (12) articulée autorisant un déplacement à pivotement du rail (5) entre une position escamotée d'attente dans laquelle il épouse le dessus du serre-flan (4) et une position basculée de service dans laquelle sa partie active s'étend, au-dessus de la feuille à couper, le long du bord longitudinal formant bec d'appui du serre-flan (4).

4. Table (1) de coupe selon la revendication 3,
**caractérisée en ce que** le rail (5) affecte la forme d'un dièdre, les plans du dièdre formant entre eux un angle de préférence voisin de 145°.

5. Table (1) de coupe selon la revendication 3,
**caractérisée en ce que** le rail (5) est prolongé transversalement de bras (13) articulés, au voisinage de leur extrémité, au serre-flan (4) ou au sommier (2), de préférence de manière amovible.

6. Table (1) de coupe selon la revendication 5,
**caractérisée en ce que** le serre-flan (4) est articulé au sommier (2) par l'intermédiaire de bras dont l'axe d'articulation est parallèle ou confondu avec l'axe d'articulation des bras (13) du rail (5) au sommier (2).

7. Table (1) de coupe selon la revendication 1,
**caractérisée en ce qu'**il est prévu, embarquées sur le rail, au moins deux butées de réglage de fin de course de la feuille à couper.

8. Table (1) de coupe selon la revendication 7,
**caractérisée en ce que** chaque butée est formée d'un bras (15) équipé d'un curseur (16) coulissant le long du bras (15), ce bras (15) étant monté à pivotement sur le rail (5) autour d'un axe parallèle à l'axe de déplacement du chariot (6) sur le rail (5) pour passer d'une position d'attente à une position de service dans laquelle le curseur (16) formant butée fait saillie dans le plan de serrage de la feuille à couper.

9. Table (1) de coupe selon la revendication 1,
**caractérisée en ce que** les organes de guidage ou d'appui du chariot sont formés par des galets (11, 17) d'axe vertical généralement perpendiculaire à l'axe de déplacement du chariot le long du rail.

10. Dispositif de découpe de métal en feuille comprenant un rail (5) de guidage et un chariot (6) déplaçable à coulissement le long dudit rail (5), ce chariot (6) positionné par simple appui sur ledit rail (5) portant au moins deux molettes (7, 8) de coupe à axes de rotation parallèles destinées à s'étendre de part et d'autre de la feuille à couper, le couple de basculement du chariot (6) lié au poids des molettes (7, 8) étant neutralisé par appui du chariot le long d'un flanc (10) du rail (5),
**caractérisé en ce que** le chariot (6) et le rail (5), qui assure seul le guidage et l'appui en façade du chariot (6), sont équipés de moyens de liaison à une table de coupe conforme à l'une des revendications 1 à 9.

## Claims

1. Cutting table (1) for sheet-metal, in particular zinc, of the type having a transom (2) forming the table, a blank-clamp (4) which is movable between a position for introducing or withdrawing the said sheet and a position for clamping the sheet to be cut against the said transom (2), a cutting-up device comprising a guide rail (5) and a carriage (6) which is capable of sliding displacement along the said rail (5), the said carriage (6), which is generally positioned by simply being supported on the said rail (5), carrying at least two cutting wheels (7, 8) which have parallel axes of rotation and are intended to extend on either side of the sheet to be cut, the tilting torque of the carriage (6), which torque is linked to the weight of the cutting wheels (7, 8), being neutralised by the supporting of the carriage (6) at the front of the table (1),
**characterised in that** the rail (5), whose active part extends along the longitudinal edge forming a supporting nose of the blank-clamp (4), is equipped with at least two active surfaces (9, 10), one for guiding the carriage (6) axially and the other (10) for supporting said carriage (6) at the front, the said supporting surface (10) being formed by the flank (10) of the rail (5), which acts as a ruler so as to enable the rail to carry out, on its own, the guidance and frontal support of the carriage with a view to obtaining an autonomous cutting-up device which is capable of fitting any type of table (1).

2. Cutting table (1) according to claim 1,
**characterised in that** the guide surface (9) of the rail (5) is formed by a lip (9) projecting from the face of the top of the rail (5).

3. Cutting table (1) according to claim 1,
**characterised in that** the rail (5) is coupled to the blank-clamp (4) or to the transom (2) by an articulated link (12) allowing pivoting displacement of the rail (5) between a retracted, waiting position in which it lies close to the top of the blank-clamp (4), and a tilted operating position in which its active part extends, above the sheet to be cut, along the longitudinal edge forming the supporting nose of the blank-clamp (4).

4. Cutting table (1) according to claim 3,
**characterised in that** the rail (5) is in the form of a dihedral, the planes of said dihedral forming, between them, an angle which is preferably in the region of 145°.

5. Cutting table (1) according to claim 3,
**characterised in that** the rail (5) is prolonged transversely by arms (13) which are articulated, in the vicinity of their end, with the blank-clamp (4) or with the transom (2), preferably in a detachable manner.

6. Cutting table (1) according to claim 5,
**characterised in that** the blank-clamp (4) is articulated with the transom (2) via arms whose axis of articulation is parallel with, or identical to, the axis of articulation of the arms (13) of the rail (5) with the transom (2).

7. Cutting table (1) according to claim 1,
**characterised in that** there are provided, on board the rail, at least two stops for adjusting the end of travel of the sheet to be cut.

8. Cutting table (1) according to claim 7,
**characterised in that** each stop is formed by an arm (15) equipped with a cursor (16) which slides along said arm (15), the latter being mounted on the rail (5) for pivoting movement about an axis parallel to the axis of displacement of the carriage (6) on the rail (5) in order to change from a waiting position to an operating position in which the cursor (16) forming a stop projects into the plane of clamping of the sheet to be cut.

9. Cutting table (1) according to claim 1,
**characterised in that** the components for guiding or supporting the carriage are formed by rollers (11, 17) having a vertical axis which is generally perpendicular to the axis of displacement of the carriage along the rail.

10. Device for cutting up sheet-metal, comprising a guide rail (5) and a carriage (6) which is capable of sliding displacement along the said rail (5), the said carriage (6), which is positioned by simply being supported on the said rail (5), carrying at least two cutting wheels (7, 8) which have parallel axes of rotation and are intended to extend on either side of the sheet to be cut, the tilting torque of the carriage (6), which torque is linked to the weight of the cutting wheels (7, 8), being neutralised by the supporting of the carriage (6) along one flank (10) of the rail (5),
**characterised in that** the carriage (6) and the rail (5), which carries out, on its own, the guidance and frontal support of the carriage (6), are equipped with means of connection to a cutting table in accordance with one of claims 1 to 9.

## Patentansprüche

1. Schneidtisch (1) für Metallbleche, insbesondere Zinkbleche, mit einem Balken (2), der einen Tisch bildet, einem Niederhalter (4), der zwischen einer Position zum Einlegen oder Entnehmen des Bleches und einer Position zum Festklemmen des zu schneidenden Bleches gegen den Balken (2) beweglich ist, einer Schneidvorrichtung mit einer Führungsschiene (5) und einem entlang der Führungsschiene (5) gleitend verschiebbaren Schlitten (6), wobei der Schlitten (6), der im Allgemeinen durch einfaches Anlegen an die Führungsschiene (5) positioniert wird, wenigstens zwei Schneidräder (7, 8) mit parallelen Drehachsen trägt, die dafür vorgesehen sind, von einer zur anderen Seite des zu schneidenden Bleches zu fahren, wobei das mit dem Gewicht der Schneidräder (7, 8) verbundene Kippmoment des Schlittens (6) durch Anlegen des Schlittens (6) an der Vorderseite des Schneidtisches (1) aufgehoben wird, **dadurch gekennzeichnet, dass** die Führungsschiene (5), deren aktiver Teil sich entlang der Längskante erstreckt, die das Anlagestück des Niederhalters (4) bildet, wenigstens zwei aktive Flächen (9, 10) aufweist, eine Fläche zur Führung des Schlittens (6) in axialer Richtung und eine Fläche (10) zur Anlage des Schlittens (6) an der Vorderseite, wobei die Anlagefläche (10) von der Flanke (10) der Führungsschiene (5) gebildet wird, die als Lineal dient, um der Führungsschiene zu ermöglichen, das Führen und Anlegen des Schlittens an der Vorderseite allein zu ermöglichen und damit eine unabhängige Schneidvorrichtung zu erhalten, die an jede Ausführung eines Schneidtisches (1) angepasst werden kann.

2. Schneidtisch (1) nach Anspruch 1, **dadurch gekennzeichnet, dass** die Führungsfläche (9) der Führungsschiene (5) von einer Lippe (9) gebildet ist, die von der Oberseite der Führungsschiene (5) hochragt.

3. Schneidtisch (1) nach Anspruch 1, **dadurch gekennzeichnet, dass** die Führungsschiene (5) mit dem Niederhalter (4) oder dem Balken (2) über eine gelenkige Verbindung (12) verbunden ist, die eine Schwenkbewegung der Führungsschiene (5) zwischen einer neutralen Warteposition, in der sie an der Oberseite des Niederhalters (4) anliegt, und einer gekippten Arbeitsposition, in der sich ihr aktiver Teil über dem zu schneidenden Blech entlang der Längskante erstreckt, die das Anlagestück des Niederhalters (4) bildet, erlaubt.

4. Schneidtisch (1) nach Anspruch 3, **dadurch gekennzeichnet, dass** die Führungsschiene (5) als Zweiflach ausgebildet ist, wobei die Flächenstücke einen Winkel im Bereich von vorzugsweise 145° bilden.

5. Schneidtisch (1) nach Anspruch 3, **dadurch gekennzeichnet, dass** die Führungsschiene (5) in Querrichtung durch Arme (13), die an ihren Enden mit dem Niederhalter (4) oder dem Balken (2) gelenkig verbunden sind, vorzugsweise beweglich verlängert ist.

6. Schneidtisch (1) nach Anspruch 5, **dadurch gekennzeichnet, dass** der Niederhalter (4) mit dem Balken (2) über einen Arm, dessen Gelenkachse parallel oder zusammenlaufend mit der Gelenkachse der Arme (13) der Führungsschiene (5) zum Balken (2) verläuft, gelenkig verbunden ist.

7. Schneidtisch (1) nach Anspruch 1, **dadurch gekennzeichnet, dass** an der Führungsschiene wenigstens zwei Einstellanschläge für das zu schneidende Blech angebracht sind.

8. Schneidtisch (1) nach Anspruch 7, **dadurch gekennzeichnet, dass** jeder Anschlag von einem Arm (15) gebildet wird, der mit einem Gleitschieber (16) versehen ist, der den Arm (15) entlang gleitet, wobei der Arm (15) drehbeweglich um eine parallel zur Bewegungsachse des Schlittens (6) zur Führungsschiene (5) verlaufende Achse an der Führungsschiene (5) befestigt ist, um von einer Warteposition in eine Arbeitsposition überzugehen, in der der den Anschlag bildende Gleitschieber (16) in die Halteebene des zu schneidenden Bleches ragt.

9. Schneidtisch (1) nach Anspruch 1, **dadurch gekennzeichnet, dass** die Führungs- oder Anlageelemente des Schlittens von Laufrollen (11, 17) gebildet werden, deren vertikale Achse im Allgemeinen senkrecht zur Bewegungsachse des Schlittens zur Führungsschiene verläuft.

10. Schneidvorrichtung für Metallbleche mit einer Führungsschiene (5) und einem entlang der Führungsschiene (5) gleitend verschiebbaren Schlitten (6), wobei der Schlitten (6), der durch einfaches Anlegen an die Führungsschiene (5) positioniert wird, wenigstens zwei Schneidräder (7, 8) mit parallelen Drehachsen trägt, die dafür vorgesehen sind, von einer zur anderen Seite des zu schneidenden Bleches zu fahren, wobei das mit dem Gewicht der Schneidräder (7, 8) verbundene Kippmoment des Schlittens (6) durch Anlegen des Schlittens an einer Flanke (10) der Führungsschiene (5) aufgehoben wird, **dadurch gekennzeichnet, dass** der Schlitten (6) und die Führungsschiene (5), die das Führen und Anlegen des Schlittens (6) an der Vorderseite allein sicherstellt, mit Mitteln zur Verbindung mit einem Schneidtisch nach einem der Ansprüche 1 bis 9 ausgerüstet sind.
